# EUROPEAN PATENT SPECIFICATION

(11) **EP 3 282 447 B1**
(45) Date of publication and mention of the grant of the patent: **26.08.2020**
(21) Application number: 15887792.8
(22) Date of filing: 22.12.2015
(51) Int. Cl.: G10L 15/22, G11B 27/34, G10L 15/18

(54) **PROGRESSIVE UTTERANCE ANALYSIS FOR SUCCESSIVELY DISPLAYING EARLY SUGGESTIONS BASED ON PARTIAL SEMANTIC PARSES FOR VOICE CONTROL.
REAL TIME PROGRESSIVE SEMANTIC UTTERANCE ANALYSIS FOR VISUALIZATION AND ACTIONS CONTROL.**
INFORMATIONSVERARBEITUNGSVORRICHTUNG, STEUERUNGSVERFAHREN UND -PROGRAMM
DISPOSITIF DE TRAITEMENT D'INFORMATIONS, PROCÉDÉ DE COMMANDE ET PROGRAMME

(30) Priority: 31.03.2015 JP 2015073894
(43) Date of publication of application: 14.02.2018
(73) Proprietor: Sony Corporation, Tokyo 108-0075 (JP)
(72) Inventor: OHMURA, Junki, Tokyo 108-0075 (JP); KIRIHARA, Reiko, Tokyo 108-0075 (JP); SUKI, Yasuyuki, Tokyo 108-0075 (JP); OGASAWARA, Koichi, Tokyo 108-0075 (JP)
(74) Representative: MFG Patentanwälte Meyer-Wildhagen Meggle-Freund Gerhard PartG mbB
(86) International application number: PCT/JP2015/085845
(87) International publication number: WO 2016/157650

(56) References cited:
- JP-A- 2003 208 196
- JP-A- 2005 283 972
- JP-A- 2005 283 972
- JP-A- 2014 203 207
- US-A- 5 734 893
- US-A1- 2004 243 419
- US-A1- 2014 304 605
- STOLPER CHARLES D ET AL: "Progressive Visual Analytics: User-Driven Visual Exploration of In-Progress Analytics", IEEE TRANSACTIONS ON VISUALIZATION AND COMPUTER GRAPHICS, IEEE SERVICE CENTER, LOS ALAMITOS, CA, US, vol. 20, no. 12, 31 December 2014 (2014-12-31), pages 1653-1662, XP011563306, ISSN: 1077-2626, DOI: 10.1109/TVCG.2014.2346574 [retrieved on 2014-10-23]
- KUANSAN WANG: "Semantic modeling for dialog systems in a pattern recognition framework", AUTOMATIC SPEECH RECOGNITION AND UNDERSTANDING, 2001. ASRU '01. IEEE W ORKSHOP ON 9-13 DEC. 2001, PISCATAWAY, NJ, USA,IEEE, 9 December 2001 (2001-12-09), pages 284-287, XP010603732, ISBN: 978-0-7803-7343-3
- Anonymous: "Probabilistic Context-Free Grammar - Wikipedia", , 18 February 2015 (2015-02-18), pages 1-13, XP055623520, internet Retrieved from the Internet: URL:https://en.wikipedia.org/w/index.php?t itle=Probabilistic_context-free_grammar&ol did=647676890 [retrieved on 2019-09-18]

## Description

### Technical Field

The present disclosure relates to information processing apparatuses, control methods, and programs.

### Background Art

Techniques of performing speech recognition/semantic analysis on a user's speech, and responding by outputting a voice have conventionally been developed. In particular, recent progress in speech recognition algorithms and recent advances in computer technologies have allowed speech recognition to be processed in a practical time, and therefore, a user interface (UI) using a voice has been widely used in a smartphone, tablet terminal, and the like.

For example, a voice UI application which is installed in a smartphone, tablet terminal, or the like can respond to inquiries which are made through a user's voice, in a voice, or perform processes corresponding to instructions which are made through a user's voice.

JP 2005 283972 A describes a speech recognition method for speedily answering to a person who speaks when a human's natural utterance speech which is inputted is recognized and an information processor that extracts a predetermined word from the utterance and gives some answer to the person, and a method and a device for presenting information by using the method.

US 2004/0243419 A1 describes a method and system provide a speech input mode which dynamically reports partial semantic parses, while audio captioning is still in progress. The semantic parses can be evaluated with an outcome immediately reported back to the user.

"Progressive Visual Analytics: User-Driven Visual Exploration of In-Progress Analytics" describes an alternative workflow, progressive visual analytics, which enables an analyst to inspect partial results of an algorithm as they become available and interact with the algorithm to prioritize subspaces of interest.

KUANSAN WANG: "Semantic modeling for dialog systems in a pattern recognition framework", AUTOMATIC SPEECH RECOGNITION AND UNDERSTANDING ASRU '01. IEEE WORKSHOP ON 9-13 DEC. 2001, PISCATAWAY, NJ, USA, IEEE, (2001-12-09), pages 284-287, XP010603732, ISBN: 978-0-7803-7343-3 defines semantic modeling for dialog systems, in particular a field to which a user can issue naturally spoken commands such as "Schedule a meeting with John tomorrow at two o'clock". The system will recognize and parse the utterance and, in response, pop up a meeting arrangement page with proper fields filled based on user's utterance.

### Citation List

### Patent Literature

Patent Literature 1: JP 2012-181358A

### Summary of Invention

### Technical Problem

However, in a typical voice UI using speech recognition, only one responding method finally determined is returned with respect to a user's voice input. Therefore, it is necessary for a user to wait until the system has completed the process. During the waiting time, no feedback is given from the system to a user, so that the user may be worried that their voice input is not being properly processed.

Also, Patent Literature 1 described above proposes a technique of automatically converting an input voice into text, and specifically, a system for converting an input voice into text and displaying the text in real time. In the system, the above voice UI is not assumed. Specifically, only text obtained by converting an input voice is displayed, and no semantic analysis or no response (also referred to as a responding action) based on semantic analysis is fed back, unlike voice interaction. Therefore, the user cannot observe a specific action which is caused by their speech until the system has started the action.

With the above in mind, the present disclosure proposes an information processing apparatus, control method, and program capable of notifying a user of a candidate for a response, from the middle of a speech, through a voice UI.

### Solution to Problem

According to a first aspect, the invention provides an information processing apparatus in accordance with independent claim 1. According to a second aspect, the invention provides a control method in accordance with independent claim 12. According to a third aspect, the invention provides a program in accordance with independent claim 13. Further aspects of the invention are set forth in the dependent claims, the drawings and the following description.

### Advantageous Effects of Invention

As described above, according to the present disclosure, a user can be notified of a candidate for a response, from the middle of a speech, through a voice UI.

Note that the effects described above are not necessarily limitative. With or in the place of the above effects, there may be achieved any one of the effects described in this specification or other effects that may be grasped from this specification.

### Brief Description of Drawings

[FIG. 1] FIG. 1 is a diagram for describing an overview of a speech recognition system according to the invention.
[FIG. 2] FIG. 2 is a diagram for describing timings of a speech and a response through a typical voice UI.
[FIG. 3] FIG. 3 is a diagram for describing timings of a speech and a response through a voice UI
[FIG. 4] FIG. 4 is a diagram showing an example of a configuration of an information processing apparatus.
[FIG. 5] FIG. 5 is a diagram showing display examples of candidates for a responding action according to a score according to this invention.
[FIG. 6] FIG. 6 is a flowchart showing an operation process of a speech recognition system according to this invention.
[FIG. 7] FIG. 7 is a diagram showing a case where speech text is displayed together with a display of a responding action candidate according to this embodiment.
[FIG. 8] FIG. 8 is a diagram for describing a display method in which a difference in score between each responding action candidate is fed back by changing a display dot size.
[FIG. 9] FIG. 9 is a diagram for describing a method for displaying a display area and an information amount according to the score of a responding action candidate.
[FIG. 10] FIG. 10 is a diagram for describing a grayed-out display of a responding action candidate according to this embodiment.
[FIG. 11] FIG. 11 is a diagram for describing a method for displaying responding action candidates when there are a plurality of users according to this embodiment.
[FIG. 12] FIG. 12 is a diagram for describing a method for displaying a responding action candidate according to a state of a screen according to this embodiment.
[FIG. 13] FIG. 13 is a diagram showing an example of an icon indicating a more specific action involved in an application according to an example useful for understanding the invention.
[FIG. 14] FIG. 14 is a diagram showing an example of an icon indicating an action involved in volume adjustment according to an example useful for understanding the invention.

### Description of Embodiment(s)

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Also, description will be provided in the following order.
1. Overview of speech recognition system according to one embodiment of the present disclosure
2. Configuration
3. Operation process
4. Display examples of candidates for responding action
4-1. Display of speech text
4-2. Display method according to score
4-3. Display method where there are plurality of speakers
4-4. Display method in regions other than main display region
4-5. Different display methods for different screen states
4-6. Other icon display examples
5. Conclusion

### <<1. Overview of speech recognition system according to the invention>>

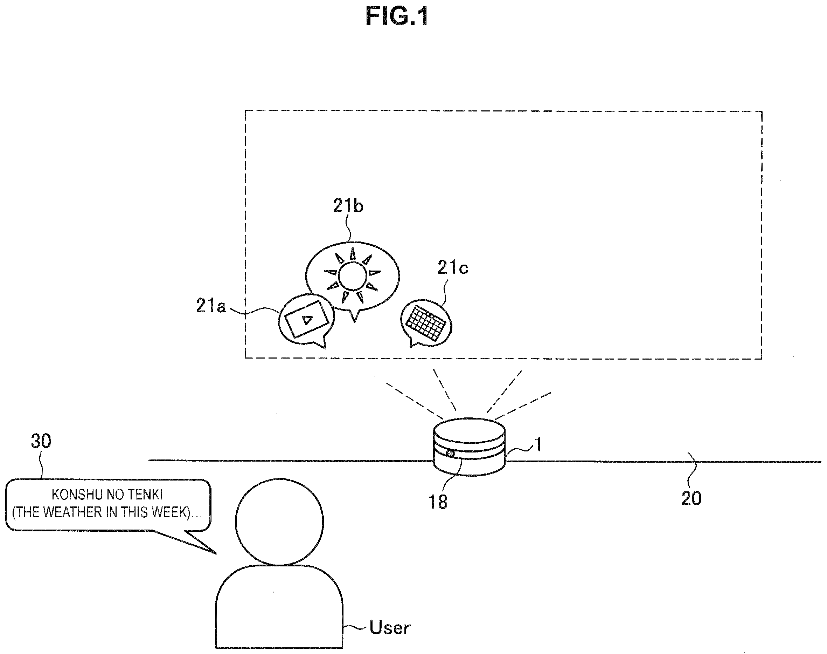

A speech recognition system according to the invention has a basic function of performing speech recognition/semantic analysis on a user's speech, and responding by outputting a voice. An overview of the speech recognition system according to the invention will now be described with reference to FIG. 1.

FIG. 1 is a diagram for describing an overview of the speech recognition system according to the invention. The information processing apparatus 1 shown in FIG. 1 has a voice UI agent function capable of performing speech recognition/semantic analysis on a user's speech, and outputting a response to the user using a voice. The external appearance of the information processing apparatus 1 is not particularly limited, and may have, for example, a cylindrical shape shown in FIG. 1. The information processing apparatus 1 is placed on a floor, a table, or the like in a room. Also, the information processing apparatus 1 is provided with a light emission unit 18 in the shape of a band extending around a horizontal middle region of a side surface thereof. The light emission unit 18 includes a light emitting device, such as a light emitting diode (LED) or the like. The information processing apparatus 1 can notify the user of the status of the information processing apparatus 1 by causing the light emission unit 18 to emit light from all or a portion thereof. For example, the information processing apparatus 1, when interacting with the user, can appear as if it gazed the user as shown in FIG. 1, by causing the light emission unit 18 to emit light in the direction of the user, i.e., the speaker from a portion thereof. Also, the information processing apparatus 1 can control the light emission unit 18 so that light turns around the side surface during production of a response or search of data, thereby notifying the user that the information processing apparatus 1 is performing processing.

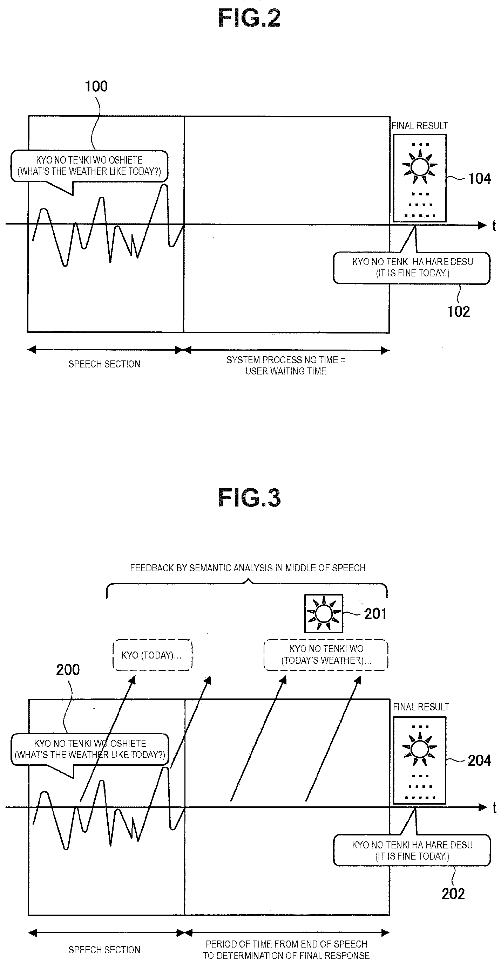

Here, in a typical voice UI using speech recognition, only one responding method finally determined is returned with respect to a user's voice input. Therefore, it is necessary for a user to wait until the system has completed the process. During the waiting time, no feedback is given from the system to the user, so that the user may be worried that their voice input is not being properly processed. FIG. 2 is a diagram for describing timings of a speech and a response through a typical voice UI. As shown in FIG. 2, in a speech section in which a user is uttering a speech 100 "Kyo no tenki oshiete (What's the weather like today?)," the system does not perform speech recognition or semantic analysis, and after the end of the speech, the system performs the process. Thereafter, after the end of the process, the system outputs, as a finally determined response, a response voice 102 "Kyo no tenki ha hare desu (It is fine today)" or a response image 104 indicating weather information. In this case, the entire system processing time is the user's waiting time, during which no feedback is given from the system.

With this in mind, in the speech recognition system according to the invention , the user can be notified of a candidate for a response, from the middle of a speech, through a voice UI.

Specifically, the information processing apparatus 1 sequentially performs speech recognition and semantic analysis in the middle of a speech, and on the basis of the result, acquires a candidate for a response, produces an icon (or text) representing the acquired response candidate, and notifies the user of the icon. FIG. 3 is a diagram for describing timings of a speech and a response through a voice UI according to this embodiment. As shown in FIG. 3, in a speech section in which a user is uttering a speech 200 "Kyo no tenki wo oshiete (What's the weather like today?)," the system sequentially performs the speech recognition and semantic analysis processes, and notifies the user of a candidate for a response on the basis of the result of the recognition. For example, an icon 201 indicating a weather application is displayed on the basis of speech recognition on a portion of the speech "Kyo no tenki wo (today's weather)." After the end of the speech, the system outputs, as a finally determined response, a response voice 202 "Kyo no tenki ha hare desu (It is fine today)" or a response image 204 indicating weather information. Thus, although the period of time between the end of the speech and the determination of a final response is the same as the system processing time of a typical voice UI shown in FIG. 2, a feedback such as the display of the icon 201 or the like is given by the system during that period of time. Therefore, until a response has been finally determined, the user is not worried, and does not feel that the waiting time is long.

In the example shown in FIG. 1, in the middle of a speech 30 "Konshu no tenki (this week's weather)..." which is being made by a user, the information processing apparatus 1 performs speech recognition and semantic analysis on "Konshu no tenki (this week's weather)," and on the basis of the result, acquires the activation of a moving image application, weather forecast application, and calendar application, as a responding action. Thereafter, the information processing apparatus 1 projects an icon 21a for the moving image application, an icon 21b for the weather forecast application, and an icon 21c for the calendar application onto a wall 20, thereby notifying the user of the response candidates.

As a result, the user can understand that their voice input is recognized in the middle of the speech, and can know a candidate for a response in real time.

In the foregoing, an overview of the speech recognition system according to the present disclosure has been described. Note that the shape of the information processing apparatus 1 is not limited to the cylindrical shape shown in FIG. 1, and may be, for example, cubic, spherical, polyhedric, or the like. Next, a basic configuration and operation process of the information processing apparatus 1 which are used to implement a speech recognition system according to the invention will be described sequentially.

### <<2. Configuration>>

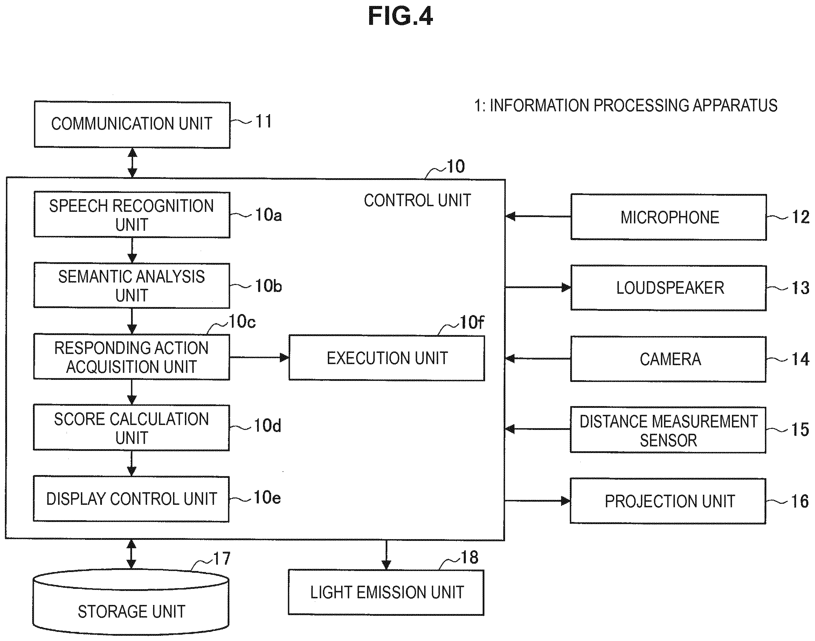

FIG. 4 is a diagram showing an example of a configuration of the information processing apparatus 1. As shown in FIG. 4, the information processing apparatus 1 includes a control unit 10, a communication unit 11, a microphone 12, a loudspeaker 13, a camera 14, a distance measurement sensor 15, a projection unit 16, a storage unit 17, and a light emission unit 18.

### (Control unit 10)

The control unit 10 controls each component of the information processing apparatus 1. The control unit 10 is implemented in a microcomputer including a central processing unit (CPU), a read only memory (ROM), a random access memory (RAM), and a non-volatile memory. Also, as shown in FIG. 4, the control unit 10 according to this embodiment also functions as a speech recognition unit 10a, a semantic analysis unit 10b, a responding action acquisition unit 10c, a score calculation unit 10d, a display control unit 10e, and an execution unit 10f.

The speech recognition unit 10a recognizes the user's voice collected by the microphone 12 of the information processing apparatus 1, and converts the voice into a string of characters to acquire speech text. Also, the speech recognition unit 10a can identify a person who is uttering a voice on the basis of a feature of the voice, or estimate the direction of the source of the voice, i.e., the speaker.

Also, the speech recognition unit 10a according to this embodiment sequentially performs speech recognition in real time from the start of the user's speech, and outputs the result of speech recognition in the middle of the speech to the semantic analysis unit 10b.

The semantic analysis unit 10b performs a natural language process or the like on speech text acquired by the speech recognition unit 10a for semantic analysis. The result of the semantic analysis is output to the responding action acquisition unit 10c.

Also, the semantic analysis unit 10b according to this embodiment can sequentially perform semantic analysis on the basis of the result of speech recognition in the middle of a speech which is output from the speech recognition unit 10a. The semantic analysis unit 10b outputs the result of the semantic analysis performed sequentially to the responding action acquisition unit 10c.

The responding action acquisition unit 10c acquires a responding action with respect to the user's speech on the basis of the result of semantic analysis. Here, the responding action acquisition unit 10c can acquire a candidate for a responding action at the current time on the basis of the result of semantic analysis in the middle of a speech. For example, the responding action acquisition unit 10c acquires an action corresponding to an example sentence having a high level of similarity, as a candidate, on the basis of comparison of speech text recognized by the speech recognition unit 10a with example sentences registered for learning of semantic analysis. In this case, because the speech text to be compared is not complete, the responding action acquisition unit 10c may compare the speech text with a first half of each example sentence, depending on the length of the speech. Also, the responding action acquisition unit 10c can acquire a candidate for a responding action by utilizing the occurrence probability of each word contained in speech text. Here, a semantic analysis engine which uses a natural language process may be produced in a learning-based manner. Specifically, a large number of speech examples assumed in the system are previously collected, and are each correctly associated (also referred to as "labeled") with a responding action of the system, i.e., learnt as a data set. Thereafter, by comparing the data set with speech text obtained by speech recognition, a responding action of interest can be obtained. Note that this embodiment does not depend on the type of a semantic analysis engine. Also, the data set learnt by a semantic analysis engine may be personalized for each user.

The responding action acquisition unit 10c outputs the acquired candidate for a responding action to the score calculation unit 10d.

Also, when a responding action is based on the result of semantic analysis after the end of a speech, the responding action acquisition unit 10c determines that the responding action is a final one, and outputs the final responding action to the execution unit 10f.

The score calculation unit 10d calculates scores for candidates for a responding action acquired by the responding action acquisition unit 10c, and outputs the score calculated for each responding action candidate to the display control unit 10e. For example, the score calculation unit 10d calculates a score according to the level of similarity which is obtained by comparison with an example sentence registered for semantic analysis learning which is performed during acquisition of the responding action candidate.

Also, the score calculation unit 10d can calculate a score, taking into a user environment into account. For example, during an operation of the voice UI according to this embodiment, the user environment is continually acquired and stored as the user's history. When the user can be identified, a score can be calculated, taking into account the history of operations by the user and the current situation. As the user environment, for example, a time zone, a day of the week, a person who is present together with the user, a state of an external apparatus around the user (e.g., the on state of a TV, etc.), noise environment, the lightness of a room (i.e., an illuminance environment), or the like may be acquired. As a result, when the user can be identified, the score calculation unit 10d can calculate a score, taking into account the history of operations by the user and the current situation. Basically, weighting may be performed according to the user environment in combination with score calculation according to the level of similarity with an example sentence during the above acquisition of a responding action candidate.

There may be various examples of the operation history and the current situation, and a portion thereof will be described below. The information processing apparatus 1 may weight a score according to the current user environment after learning of a data set described below.

**[Table 1]**

| | |
|---|---|
| Operation history | the history of speeches, the frequency of use of each responding action, the most recently used responding action (e.g., the history of specific uses such as checking of a schedule in a weekend in a calendar application, etc.) |
| User environment | a user's facial expression, other people in the same space, a time zone, a user's voice tone (a whisper, etc.), a period of time during which a user stays in the room, a future schedule (a user will go to the office soon, etc.) |

As a result, for example, if the user has a history of using a moving image application alone at weekend night, then when the user is in a user environment where the user is alone in a room at weekend night, the score calculation unit 10d calculates a score by weighting an action candidate which is activation of a moving image application. Note that, in this embodiment, a recommended responding action candidate can be presented to the user according to the operation history and the current user environment.

Also, as described above, the speech recognition unit 10a sequentially acquires speech text, and the semantic analysis unit 10b sequentially performs semantic analysis in combination, and therefore, the responding action acquisition unit 10c sequentially updates acquisition of a responding action candidate. The score calculation unit 10d sequentially updates a score for each responding action candidate according to acquisition and updating of a responding action candidate, and outputs the score to the display control unit 10e.

The display control unit 10e functions as a notification control unit which performs control to notify the user of each responding action candidate in the middle of a speech according to a score for each responding action candidate calculated by the score calculation unit 10d. For example, the display control unit 10e controls the projection unit 16 so that the projection unit 16 projects and displays an icon indicating each responding action candidate on the wall 20. Also, when the score calculation unit 10d updates a score, the display control unit 10e updates a display to notify the user of each responding action candidate according to the new score.

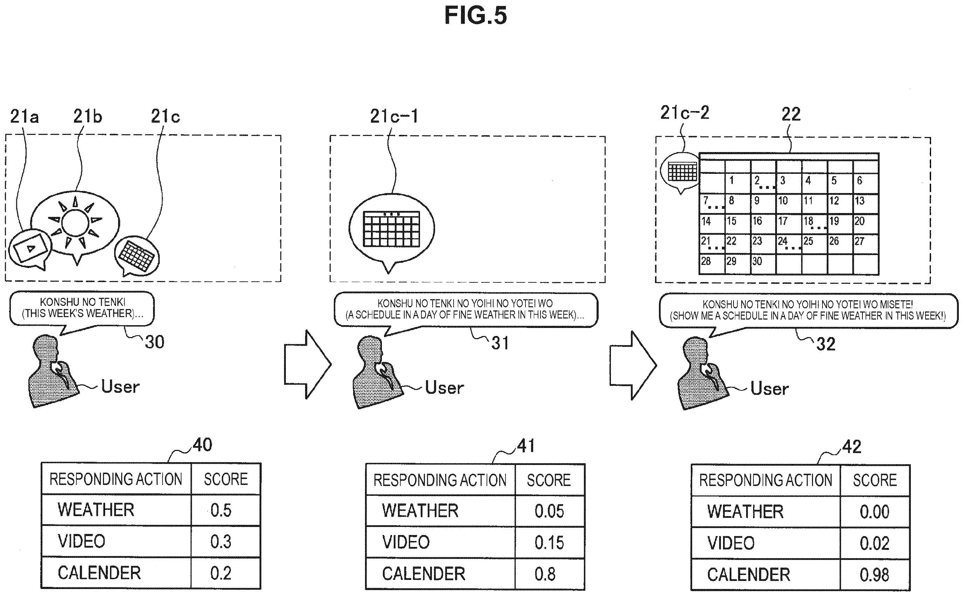

Here, a display of a responding action candidate corresponding to a score will be described with reference to FIG. 5. FIG. 5 is a diagram showing display examples of candidates for a responding action according to a score according to the invention. For example, as shown in a left portion of FIG. 5, when the user has uttered a speech 30 "Konshu no tenki (this week's weather)...," it is calculated that a score for a weather application is "0.5," a score for a moving image application is "0.3," and a score for a calendar application is "0.2," as indicated by a score table 40. In this case, as shown in the left portion of FIG. 5, the display control unit 10e controls so that the icon 21a indicating a weather application, the icon 21b indicating a moving image application, and the icon 21c indicating a calendar application are projected and displayed. The display control unit 10e may display an animation so that the icons 21a-21c are slid into a display region from the outside thereof. As a result, the user can intuitively understand that the system is performing a speech recognition process in the middle of a speech, and responding action candidates currently acquired by the system. Also, in this case, the display control unit 10e may cause the image regions (areas) of projected icons to correlate with their scores.

Next, as shown in a middle portion of FIG. 5, when the user has uttered a speech 31 "Konshu no tenki no yoihi no yotei wo (a schedule in a day of fine weather in this week)...," the score for the weather application is updated with "0.05," the score for the moving image application is updated with "0.15," and the score for the calendar application is updated with "0.8," as shown in a score table 41. In this case, the display control unit 10e updates the projected screen so that, for example, a responding action lower than a predetermined threshold is not displayed, and the size of the displayed icon of a remaining responding action is increased. Specifically, as shown in the middle portion of FIG. 5, the display control unit 10e controls so that only an icon 21c-1 indicating the calendar application is projected and displayed. Note that when an icon is control so that it is not displayed, the icon may be slid into the outside of the display region or faded out.

Thereafter, as shown in a right portion of FIG. 5, when the user has uttered a speech 32 "Konshu no tenki no yoihi no yotei wo misete! (Show me a schedule in a day of fine weather in this week!)," and the speech is ended, the score for the weather application is updated with "0.00," the score for the moving image application is updated with "0.02," and the score for the calendar application is updated with "0.98," as shown in in a score table 42. In this case, because a final responding action has been determined, the display control unit 10e performs display control so that an icon 21c-2 indicating the calendar application which has been displayed is not displayed (e.g., the display is removed by fading out). Thereafter, the responding action acquisition unit 10c determines to activate the calendar application as a responding action on the basis of the final speech text determined after the end of the speech and the result of semantic analysis, and the execution unit 10f activates the calendar application. Also, the display control unit 10e displays a monthly schedule image 22 which is generated by the calendar application activated by the execution unit 10f.

Thus, speech recognition is sequentially performed, from the middle of a speech, and a responding action candidate is fed back to the user. Also, as the speech proceeds, responding action candidates are updated, and after the end of the speech, a finally determined responding action is executed.

In the foregoing, display examples of candidates for a responding action by the display control unit 10e have been described.

When final speech text is determined (i.e., speech recognition is ended) after the end of a speech, the execution unit 10f executes a responding action finally determined by the responding action acquisition unit 10c. The responding action is herein assumed, for example, as follows.

**[Table 2]**

| Activation, pause, end, installation, uninstallation of applications | |
|---|---|
| Operations in applications | Calendar applications: display of schedule in today, display of schedule in March, addition to schedule, activation of reminder, etc. |
| | Weather applications: display of today's weather, display of next week's weather, display of information indicating whether or not umbrella is needed today, etc. |
| | Mail applications: checking of mail, reading of contents of mail aloud, creation of mail, deletion of mail, etc. |
| System operations | For example, adjustment of volume, operation of power supply, operation of music, etc. |

### (Communication unit 11)

The communication unit 11 transmits and receives data to and from an external apparatus. For example, the communication unit 11 connects to a predetermined server on a network, and receives various items of information required during execution of a responding action by the execution unit 10f.

### (Microphone 12)

The microphone 12 has the function of collecting a sound therearound, and outputting the sound as an audio signal to the control unit 10. Also, the microphone 12 may be implemented in an array microphone.

### (Loudspeaker 13)

The loudspeaker 13 has the function of converting an audio signal into a sound and outputting the sound under the control of the control unit 10.

### (Camera 14)

The camera 14 has the function of capturing an image of a surrounding area using an imaging lens provided in the information processing apparatus 1, and outputting the captured image to the control unit 10. Also, the camera 14 may be implemented in an omnidirectional camera or a wide-angle camera.

### (Distance measurement sensor 15)

The distance measurement sensor 15 has the function of measuring a distance between the information processing apparatus 1 and the user or a person around the user. The distance measurement sensor 15 is implemented in, for example, a photosensor (a sensor which measures a distance to an object of interest on the basis of information about a phase difference in light emission/light reception timing).

### (Projection unit 16)

The projection unit 16, which is an example of a display apparatus, has the function of projecting (and magnifying) and displaying an image on a wall or a screen.

### (Storage unit 17)

The storage unit 17 stores a program for causing each component of the information processing apparatus 1 to function. Also, the storage unit 17 stores various parameters which are used by the score calculation unit 10d to calculate a score for a responding action candidate, and an application program executable by the execution unit 10f. Also, the storage unit 17 stores registered information of the user. The registered information of the user includes personally identifiable information (the feature amount of voice, the feature amount of a facial image or a human image (including a body image), a name, an identification number, etc.), age, sex, interests and preferences, an attribute (a housewife, employee, student, etc.), information about a communication terminal possessed by the user, and the like.

### (Light emission unit 18)

The light emission unit 18, which is implemented in a light emitting device, such as an LED or the like, can perform full emission, partial emission, flicker, emission position control, and the like. For example, the light emission unit 18 can emit light from a portion thereof in the direction of a speaker which is recognized by the speech recognition unit 10a under the control of the control unit 10, thereby appearing as if it gazed the speaker.

In the foregoing, a configuration of the information processing apparatus 1 according to this invention has been specifically described. Note that the configuration shown in FIG. 4 is merely illustrative, and this invention is not limited to this. For example, the information processing apparatus 1 may further include an infrared (IR) camera, depth camera, stereo camera, motion sensor, or the like in order to acquire information about a surrounding environment. Also, the installation locations of the microphone 12, the loudspeaker 13, the camera 14, the light emission unit 18, and the like provided in the information processing apparatus 1 are not particularly limited. Also, the projection unit 16 is an example of a display apparatus, and the information processing apparatus 1 may perform displaying using other means. For example, the information processing apparatus 1 may be connected to an external display apparatus which displays a predetermined screen. Also, the functions of the control unit 10 according to the invention may be provided in a cloud which is connected thereto through the communication unit 11.

### <<3. Operation process>>

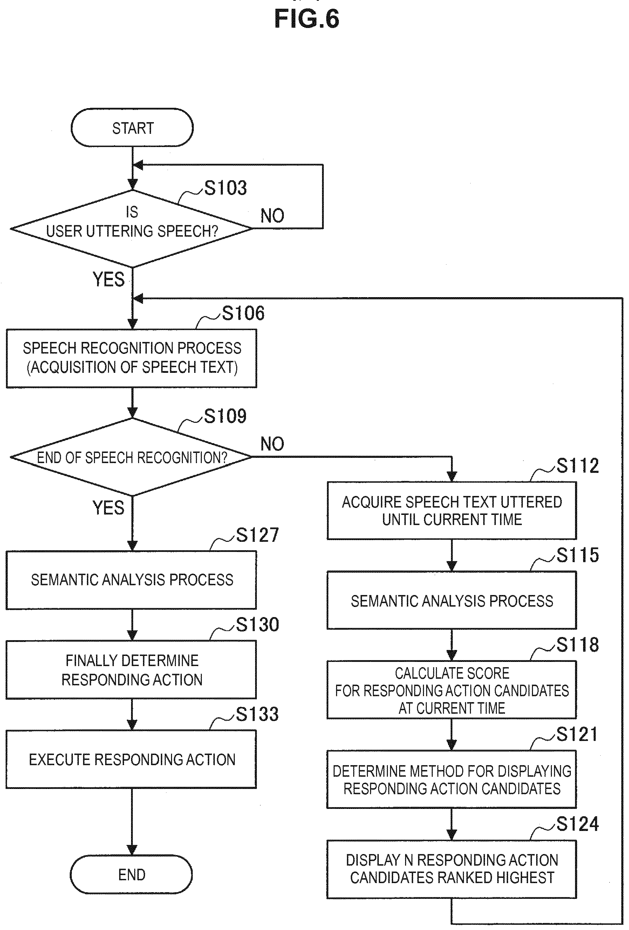

Next, an operation process of the speech recognition system according to this invention will be specifically described with reference to FIG. 6.

FIG. 6 is a flowchart showing an operation process of the speech recognition system according to the invention. As shown in FIG. 6, initially, in step SI03, the control unit 10 of the information processing apparatus 1 determines whether or not there is the user's speech. Specifically, the control unit 10 performs speech recognition on an audio signal collected by the microphone 12 using the speech recognition unit 10a to determine whether or not there is the user's speech directed to the system.

Next, in step S106, the speech recognition unit 10a acquires speech text by a speech recognition process.

Next, in step S109, the control unit 10 determines whether or not speech recognition has been completed, i.e., whether or not speech text has been finally determined. A situation where a speech is continued (the middle of a speech) means that speech recognition has not been completed, i.e., speech text has not been finally determined.

Next, if speech recognition has not been completed (S109/No), the semantic analysis unit 10b acquires speech text which has been uttered until the current time, from the speech recognition unit 10a in step S112.

Next, in step S115, the semantic analysis unit 10b performs a semantic analysis process on the basis of speech text which has been uttered until a time point in the middle of the speech.

Next, in step S118, the responding action acquisition unit 10c acquires a candidate for a responding action to the user's speech on the basis of the result of the semantic analysis performed by the semantic analysis unit 10b, and the score calculation unit 10d calculates a score for the current responding action candidate.

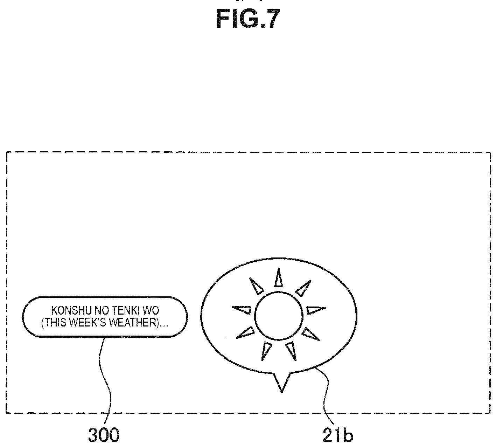

Next, in step S121, the display control unit 10e determines a method for displaying the responding action candidate. Examples of the method for displaying a responding action candidate include displaying an icon representing the responding action candidate, displaying text representing the responding action candidate, displaying in a sub-display region, displaying in a special footer region provided below a main display region when the user is viewing a movie in the main display region, and the like. Specific methods for displaying a responding action candidate will be described below with reference to FIG. 7 to FIG. 14. Also, the display control unit 10e may determine a display method according to the number of responding action candidates or a score for each responding action candidate.

Next, in step S124, the display control unit 10e performs control to display N responding action candidates ranked highest. For example, the display control unit 10e controls the projection unit 16 so that the projection unit 16 projects icons representing responding action candidates onto the wall 20.

The processes in S112-S124 described above are sequentially performed until a speech has been completed. When a responding action candidate or a score therefore is updated, the display control unit 10e changes the displayed information according to the updating.

Meanwhile, if a speech has been ended and speech recognition has been completed (final speech text has been determined) (S109/Yes), the semantic analysis unit 10b performs a semantic analysis process on the basis of the final speech text in step S127.

Next, in step S130, the responding action acquisition unit 10c finally determines a responding action with respect to the user's speech on the basis of the result of the semantic analysis performed by the semantic analysis unit 10b. Note that when the user explicitly selects a responding action, the responding action acquisition unit 10c can determine that a final responding action is one selected by the user.

Thereafter, in step S133, the execution unit 10f executes the final responding action determined by the responding action acquisition unit 10c.

In the foregoing, an operation process of the speech recognition system according to this invention has been specifically described. Note that when a history of operations performed by the user is accumulated, a process of storing a data set of the result of sensing a user environment during speech and a finally determined responding action may be performed, following step S133. Next, display examples of candidates for a responding action according to the invention will be described with reference to FIG. 7 to FIG. 14.

### <<4. Display examples of candidates for responding action>>

### <4-1. Display of speech text>

FIG. 7 is a diagram showing a case where speech text is displayed together with a display of a responding action candidate according to this embodiment. Although, in the examples shown in FIG. 1 and FIG. 5, only responding action candidates are displayed, this embodiment is not limited to this, and alternatively, recognized speech text may be additionally displayed. Specifically, as shown in FIG. 7, speech text 300 "Konshu no tenki wo (the weather in this week)..." recognized in the middle of a speech is displayed together with the icon 21b representing a responding action candidate. As a result, the user can recognize how their speech has been processed by speech recognition. Also, displayed speech text varies sequentially in association with a speech.

### <4-2. Display method according to score>

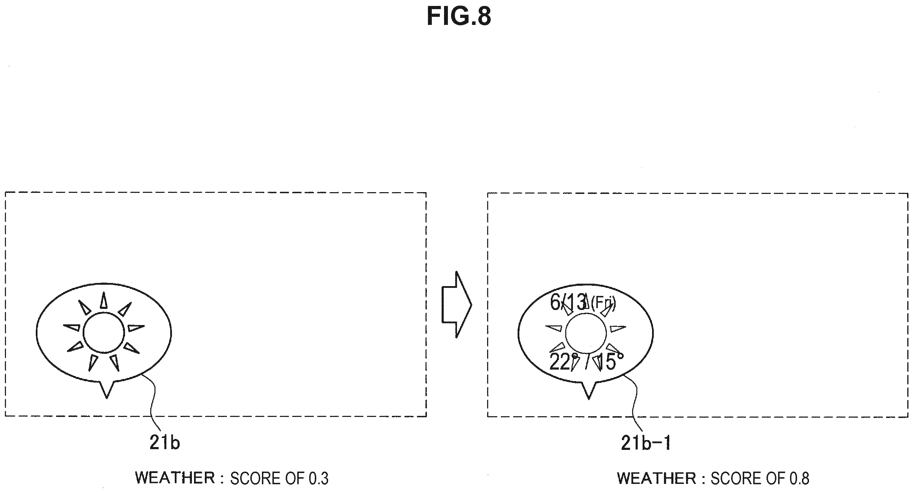

In the above example shown in FIG. 5, by causing the region where each icon representing a responding action candidate is displayed to correlate with a corresponding score, a difference in score between each responding action candidate is fed back. The invention is not limited to this. For example, even when icon images have the same display area, a difference in score between each responding action candidate can be fed back. This will now be specifically described with reference to FIG. 8.

FIG. 8 is a diagram for describing a display method in which a difference in score between each responding action candidate is fed back by changing a display dot size. For example, as shown in a left portion of FIG. 8, when a weather application which is a responding action candidate has a score of "0.3," which is lower than a predetermined threshold (e.g., "0.5"), only the icon 21b is displayed. Meanwhile, as shown in a right portion of FIG. 8, when the score is updated in association with a speech, so that the score of the weather application which is a responding action candidate is "0.8," which exceeds the predetermined threshold, an icon 21b-1 containing information which will be presented when the responding action is performed (e.g., the date and highest atmospheric temperature/lowest atmospheric temperature) is displayed. The display dot size may be changed according to the value of a score.

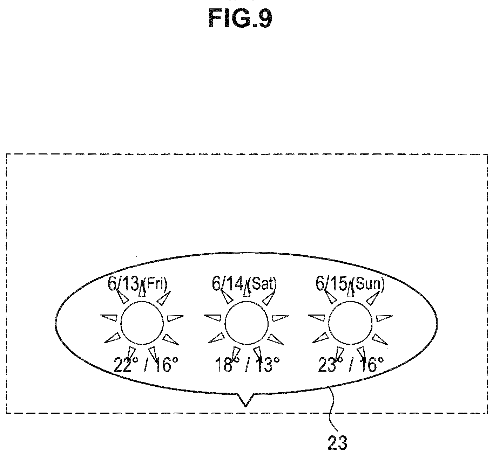

Also, in an embodiment, a region where a responding action candidate is displayed and the amount of information may be dynamically changed according to the score. This will now be described with reference to FIG. 9.

FIG. 9 is a diagram for describing a method for displaying the display area and the information amount according to the score of a responding action candidate. As indicated using an icon 23 shown in FIG. 9, the display region and the information amount can be increased according to the score, whereby more information can be presented to the user.

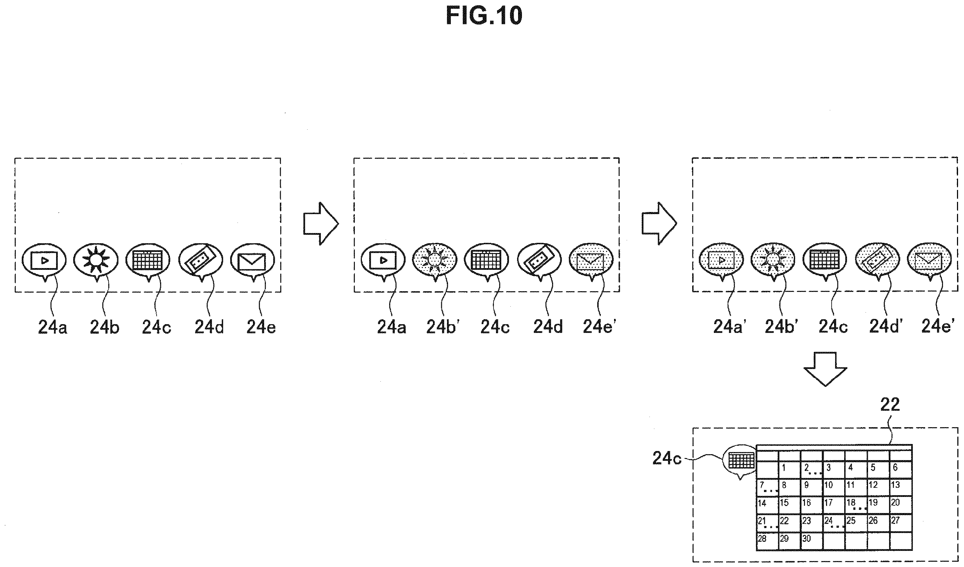

Also, in this embodiment, a responding action candidate having a low score may be displayed using other display methods, such as, for example, grayed out, instead of not being displayed, whereby it can be explicitly indicated that the score is lower than a predetermined value. This will now be described with reference to FIG. 10.

FIG. 10 is a diagram for describing the grayed-out display of a responding action candidate according to this embodiment. As shown in a left portion of FIG. 10, icons 24a-24e for responding action candidates obtained by speech recognition/semantic analysis in the middle of the user's speech, which have the same display area, are displayed, and are then updated in association with the proceeding of the speech, so that, as shown in a middle portion of FIG. 10, icons 24b' and 24e' are displayed grayed out. As a result, the user can intuitively understand that the scores of responding actions represented by the icons 24b' and 24e' are lower than a predetermined value.

Next, as shown in a right portion of FIG. 10, when, after the end of the speech, it is determined that a final responding action is a calendar application represented by the icon 24c, the other icons 24a', 24b', 24d', and 24e' disappear, and the icon 24c fades out while the calendar application is activated, so that a monthly schedule image 22 is displayed using a fade-in effect.

In the above display method, a list of responding action candidates is displayed, and therefore, the user can select a responding action which is desired, immediately even in the middle of a speech. Specifically, a displayed responding action candidate can be utilized as a short-cut to an action. In this case, the user can also select a responding action candidate which is displayed grayed out.

For example, when there is a desired action among responding action candidates displayed in the middle of a speech, the user can choose that action by saying "The left icon!," "The third icon!," or the like. Also, the choice can also be performed by using not only a voice but also a gesture, touch operation, remote controller, or the like. Also, such a choice performed by the user may be used for not only the function of determining what action is to be activated but also the function of cancelling. For example, when a speech "Konshu no tenki... a sorejyanakute (the weather in this week..., oops, this is not it)" is uttered, a responding action candidate which has been displayed in a larger size (higher score) in association with "Konshu no tenki (the weather in this week)..." can be cancelled (not displayed) and the score can be reduced.

### <4-3. Display method where there are plurality of speakers>

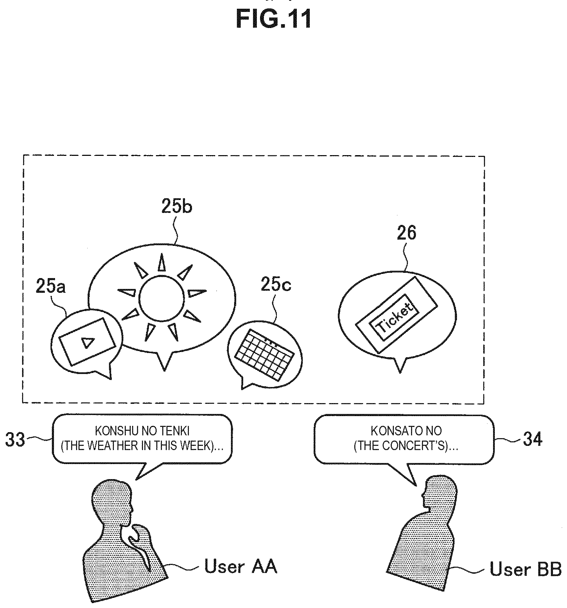

Also, the speech recognition system according to this embodiment can also be used by a plurality of users. For example, it is assumed that the locations of users (speakers) are recognized by using an array microphone or a camera, a display region is divided according to the users' locations, and an action candidate is displayed for each user. In this case, real-time speech recognition, semantic analysis, and responding action acquisition processes and the like shown in the flow of FIG. 6, for the plurality of users, are performed in parallel. This will now be specifically described with reference to FIG. 11.

FIG. 11 is a diagram for describing a method for displaying responding action candidates when a plurality of users are using the system according to this embodiment. As shown in FIG. 11, responding action candidates are displayed for a user AA's speech 33 "Konshu no tenki (the weather in this week)..." in a left portion of the display region according to a relative location of the user AA with respect to the display region. For example, icons 25a-25c are displayed. Also, responding action candidates are displayed for a user BB's speech 34 "Konsato no (the concert's)..." in a right portion of the display region according to a relative location of the user BB with respect to the display region. For example, an icon 26 is displayed.

Note that when a plurality of users are using the system, the information processing apparatus 1 according to this embodiment may perform real-time speech recognition, semantic analysis, responding action acquisition processes, and the like in an integrated manner without dividing the display region for the users, and feed a single result back.

### <4-4. Display method in regions other than main display region>

Also, the speech recognition system according to this embodiment can notify of a responding action candidate in the middle of a speech in a region other than a main display region. Here, the main display region refers to a region for projection and display performed by the projection unit 16. The information processing apparatus 1 may display a responding action candidate on, for example, a sub-display (not shown) formed by a liquid crystal display or the like provided on a side surface of the information processing apparatus 1, or an external display apparatus such as a TV, smartphone, or tablet terminal located around the user, a wearable terminal worn by the user, or the like, as a display region other than the main display region.

When display is performed in a region other than the main display region, only an icon or text for a responding action candidate having the highest score may be displayed instead of the display method shown in FIG. 5. Also, the speech recognition system according to this embodiment may use light of an LED or the like as a feedback. For example, the information processing apparatus 1 may feed back in real time by causing the light emission unit 18 to emit light having a color previously assigned to each responding action.

### <4-5. Different display methods for different screen states>

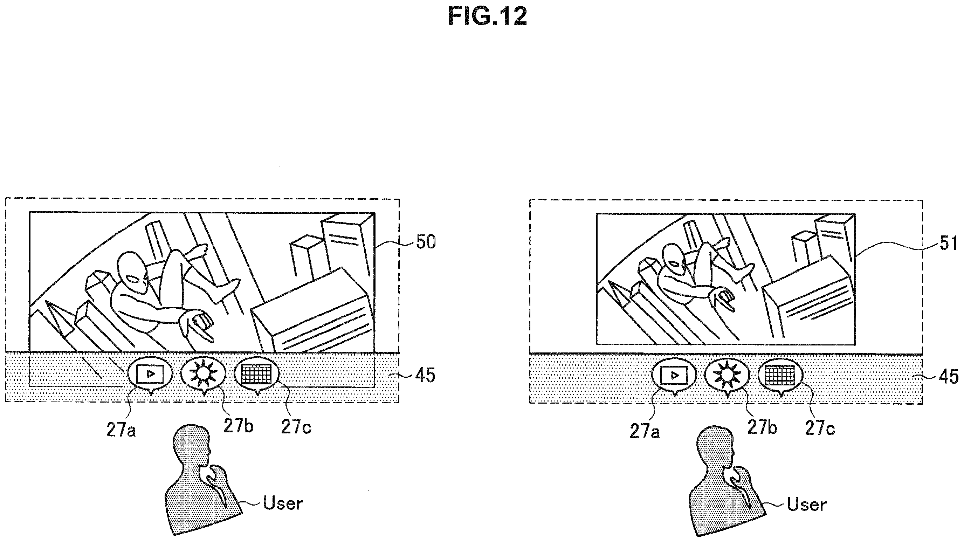

Also, the speech recognition system according to this embodiment may change the method for displaying a responding action candidate, according to the current screen state of the display region. This will now be specifically described with reference to FIG. 12.

FIG. 12 is a diagram for describing a method for displaying a responding action candidate according to a state of a screen according to this embodiment. For example, even when the user is watching a movie or the like, the user can utter a speech to the speech recognition system and thereby use a voice UI. As a result, for example, the user can instruct to, for example, adjust the volume using only a voice. In this case, if a large icon for a responding action candidate is displayed and superimposed on a screen in response to the user's speech, the icon obstructs the view of a movie.

With this in mind, for example, when a moving image 50 is being displayed as shown in a left portion of FIG. 12, the display control unit 10e of the information processing apparatus 1 according to this embodiment provides a special footer region 45 below the display region, and displays icons (e.g., icons 27a-27c) for responding action candidates in that area. Also, when it is not desirable that a display be superimposed on a portion of a moving image, the display control unit 10e can display a reduced moving image screen 51 which does not overlap the display region for displaying responding action candidates (footer region 45) as shown in a right portion of FIG. 12.

Also, when displaying icons for responding action candidates in the footer region 45, the information processing apparatus 1 can adjust the number or sizes of the displayed icons not to obstruct the view of a moving image.

Thus, the display control unit 10e of the information processing apparatus 1 according to this embodiment can perform optimum display control by using a predetermined display layout pattern according to a screen state (e.g., the amount of displayed information, the size of a display region, etc.), or a display state (icons, text, display amounts, etc.) of displayed responding action candidates. Also, the information processing apparatus 1 may use a method for displaying in regions other than the main display region, such as those described above, during playback of a moving image. As a result, the user can be notified of responding action candidates while the responding action candidates do not overlap at all the moving image screen played back in the main display region.

### <4-6. Other icon display examples useful for understanding the invention >

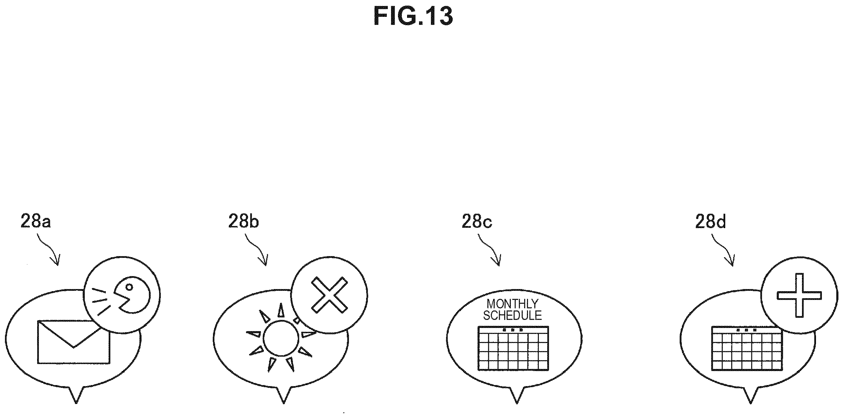

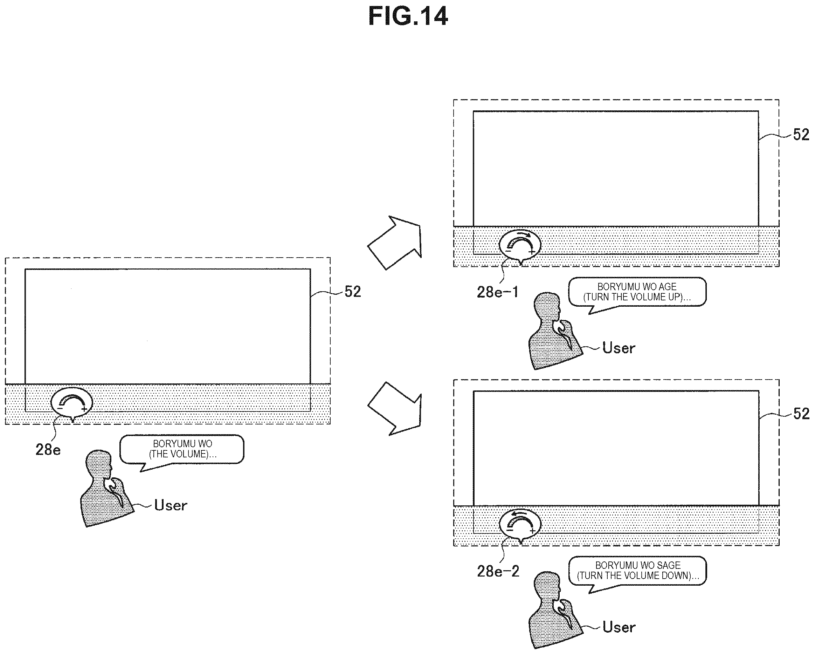

In the above display screen examples, icons indicating the activation action of various applications are shown as icons for responding action candidates. This example is not limited to this. Other display examples of candidates for a responding action will now be described with reference to FIGS. 13 and FIG. 14.

FIG. 13 is a diagram showing an example of an icon indicating a more specific action involved in an application. For example, FIG. 13 shows an icon 28a indicating reading a mail aloud, an icon 28b indicating uninstalling a weather application, an icon 28c indicating displaying a monthly schedule in a calendar application, and an icon 28d indicating adding events or activities to a schedule in a calendar application.

FIG. 14 is a diagram showing an example of an icon indicating an action involved in volume adjustment. As shown in a left portion of FIG. 14, for example, when the user utters a speech "Boryumu wo (the volume)..." during watching of a moving image 52, an icon 28e indicating volume adjustment is displayed in a footer region provided below the display region. Next, as shown in an upper right portion of FIG. 14, when the user utters a speech "Boryumu wo age (Turn the volume up)...," an icon 28e-1 indicating that the volume is to be adjusted to increase is displayed. Meanwhile, as shown in a lower right portion of FIG. 14, when the user utters a speech "Boryumu wo sage (Turn the volume down)...," an icon 28e-2 indicating that the volume is to be adjusted to decrease is displayed.

### <<5. Conclusion>>

As described above, in a speech recognition system according to the invention the user can be notified of response candidates (responding action candidate) through a voice UI from the middle of a speech, i.e., semantic analysis is sequentially performed in real time, and response candidates can be fed back to the user.

The present invention has/have been described above with reference to the accompanying drawings, whilst the present disclosure is not limited to the above examples. A person skilled in the art may find various alterations and modifications within the scope of the appended claims.

For example, a computer program can be provided which causes hardware including a CPU, ROM, RAM, and the like included in the information processing apparatus 1 to provide the functions of the information processing apparatus 1. Also, a computer readable storage medium storing the computer program is provided.

Also, the display control unit 10e displays at least a predetermined number of responding action candidates, all responding action candidates having a score exceeding a predetermined threshold, or at least a predetermined number of responding action candidates until a score exceeds a predetermined threshold.

Also, the display control unit 10e may display a responding action candidate together with its score.

### Reference Signs List

- 1: information processing apparatus
- 10: control unit
- 10a: speech recognition unit
- 10b: semantic analysis unit
- 10c: responding action acquisition unit
- 10d: score calculation unit
- 10e: display control unit
- 10f: execution unit
- 11: communication unit
- 12: microphone
- 13: loudspeaker
- 14: camera
- 15: distance measurement sensor
- 16: projection unit
- 17: storage unit
- 18: light emission unit
- 20: wall

## Claims

1. An information processing apparatus comprising:
a semantic analysis unit (10b) configured to perform semantic analysis on speech text recognized by a speech recognition unit (10a) until a time point in the middle of a speech;
a score calculation unit (lOd) configured to calculate a score for a response candidate, acquired by a responding action acquisition unit (10c), on the basis of a result of the analysis performed by the semantic analysis unit (10b), wherein the score calculation unit (10d) updates the score according to the semantic analysis sequentially performed on the speech by the semantic analysis unit (10b); and
a notification control unit (10e) configured to perform control to notify of the response candidate, until a time point in the middle of the speech, according to the score calculated by the score calculation unit (10d), wherein the notification control unit (10e) performs control to update display of the response candidate in association with the updating of the score and to notify of a plurality (21a, 21b, 21c, 21c-2, 22) of the response candidates in display forms corresponding to the scores.

2. The information processing apparatus according to claim 1,
wherein the notification control unit (10e) performs control to display a predetermined number of the response candidates having highest scores on the basis of the scores.

3. The information processing apparatus according to claim 1,
wherein the notification control unit (10e) performs control to display the response candidate or candidates having a score exceeding a predetermined value.

4. The information processing apparatus according to claim 1,
wherein the notification control unit (10e) performs control to display the response candidates using display areas corresponding to values of the scores.

5. The information processing apparatus according to claim 1,
wherein the notification control unit (10e) performs control to display icons for the response candidates, each icon including information about a display dot size corresponding to the score.

6. The information processing apparatus according to claim 1,
wherein the notification control unit (10e) performs control to display the response candidate or candidates having a score lower than a predetermined value, in a grayed-out fashion.

7. The information processing apparatus according to claim 1,
wherein the notification control unit (10e) performs control to display the recognized speech text together with the response candidates.

8. The information processing apparatus according to claim 1,
wherein the score calculation unit (10d) calculates the score, additionally taking a current user environment into account.

9. The information processing apparatus according to claim 1, further comprising:
an execution control unit (10f) configured to perform control to execute a final response.

10. The information processing apparatus according to claim 9,
wherein control is performed so that a final response determined on the basis of a result of the semantic analysis on speech text finally determined after end of the speech is executed.

11. The information processing apparatus according to claim 9,
wherein control is performed so that a final response chosen by a user is executed.

12. A control method comprising:
performing (S115) semantic analysis on speech text recognized by a speech recognition unit (10a) until a time point in the middle of a speech;
acquiring (S118), by a responding action acquisition unit (10c), a response candidate on the basis of a result of the semantic analysis;
calculating (S118), by a score calculation unit (lOd), a score for the response candidate on the basis of a result of the semantic analysis, wherein the score calculation unit (10d) updates the score according to the semantic analysis sequentially performed on the speech by the semantic analysis unit (10b); and
performing (S124) control to notify of the response candidate, until a time point in the middle of the speech, according to the calculated score, wherein a notification control unit (10e) performs control to update display of the response candidate in association with the updating of the score and to notify of a plurality of the response candidates in display forms corresponding to the scores.

13. A computer program comprising instructions, which, when the program is executed by a computer, cause the computer to carry out the method of claim 12.

## Patentansprüche

1. Informationsverarbeitungsvorrichtung, umfassend:
eine semantische Analyseeinheit (10b), die dafür ausgelegt ist, eine semantische Analyse an Sprachtext, der von einer Spracherkennungseinheit (10a) erkannt wird, bis zu einem Zeitpunkt in der Mitte eines Sprachtextes durchzuführen:
eine Bewertungsberechnungseinheit (10d), die dafür ausgelegt ist, eine Bewertung für einen Antwortkandidaten zu berechnen, erfasst von einer Antwortaktion-Erfassungseinheit (10c) auf Basis eines Ergebnisses der Analyse, die von der semantischen Analyseeinheit (10b) durchgeführt wird, wobei die Bewertungsberechnungseinheit (10d) die Bewertung gemäß der semantischen Analyse aktualisiert, die von der semantischen Analyseeinheit (10b) sequenziell für die Sprache durchgeführt wird; und
eine Benachrichtigungssteuereinheit (10e), die dafür ausgelegt ist, eine Steuerung durchzuführen, um den Antwortkandidaten mitzuteilen, bis zu einem Zeitpunkt in der Mitte des Sprachtextes, gemäß der Bewertung, die von der Bewertungsberechnungseinheit (10d) berechnet wird, wobei die Benachrichtigungssteuereinheit (10e) die Steuerung durchführt, um eine Anzeige des Antwortkandidaten in Verbindung mit dem Aktualisieren der Bewertung zu aktualisieren und mehrere (21a, 21b, 21c, 21c-2, 22) der Antwortkandidaten in Anzeigeformularen entsprechend den Bewertungen mitzuteilen.

2. Informationsverarbeitungsvorrichtung gemäß Anspruch 1, wobei die Benachrichtigungssteuereinheit (10e) eine Steuerung durchführt, um eine vorbestimmte Anzahl der Antwortkandidaten mit den höchsten Bewertungen auf Basis der Bewertungen anzuzeigen.

3. Informationsverarbeitungsvorrichtung gemäß Anspruch 1, wobei die Benachrichtigungssteuereinheit (10e) eine Steuerung durchführt, um den oder die Antwortkandidaten mit einer Bewertung anzuzeigen, die einen vorbestimmten Wert überschreitet.

4. Informationsverarbeitungsvorrichtung gemäß Anspruch 1, wobei die Benachrichtigungssteuereinheit (10e) eine Steuerung durchführt, um die Antwortkandidaten unter Verwendung von Anzeigebereichen anzuzeigen, die Werten der Bewertungen entsprechen.

5. Informationsverarbeitungsvorrichtung gemäß Anspruch 1, wobei die Benachrichtigungssteuereinheit (10e) eine Steuerung durchführt, um Symbole für die Antwortkandidaten anzuzeigen, wobei jedes Symbol Informationen zu einer Anzeigepunktgröße beinhaltet, die der Bewertung entspricht.

6. Informationsverarbeitungsvorrichtung gemäß Anspruch 1, wobei die Benachrichtigungssteuereinheit (10e) eine Steuerung durchführt, um den oder die Antwortkandidaten mit einer Bewertung, die unter einem vorbestimmten Schwellwert liegt, ausgegraut anzuzeigen.

7. Informationsverarbeitungsvorrichtung gemäß Anspruch 1, wobei die Benachrichtigungssteuereinheit (10e) eine Steuerung durchführt, um den erkannten Sprachtext zusammen mit den Antwortkandidaten anzuzeigen.

8. Informationsverarbeitungsvorrichtung gemäß Anspruch 1, wobei die Bewertungsberechnungseinheit (10d) die Bewertung berechnet, wobei zusätzlich eine aktuelle Benutzerumgebung berücksichtigt wird.

9. Informationsverarbeitungsvorrichtung gemäß Anspruch 1, ferner umfassend:
eine Ausführungssteuereinheit (10f), die dafür ausgelegt ist, eine Steuerung durchzuführen, um eine abschließende Antwort auszuführen.

10. Informationsverarbeitungsvorrichtung gemäß Anspruch 9, wobei eine Steuerung so durchgeführt wird, dass eine abschließende Antwort, die auf Basis eines Ergebnisses der semantischen Analyse am Sprachtext, das nach dem Ende der Sprache abschließend bestimmt wird, ausgeführt wird.

11. Informationsverarbeitungsvorrichtung gemäß Anspruch 9, wobei die Steuerung so durchgeführt wird, dass eine abschließende Antwort, die von einem Benutzer gewählt wird, ausgeführt wird.

12. Steuerungsverfahren, umfassend:
Durchführen (S115) einer semantischen Analyse an Sprachtext, der von einer Spracherkennungseinheit (10a) bis zu einem Zeitpunkt in der Mitte eines Sprachtextes erkannt wird;
Erfassen (S118), durch eine Antwortaktion-Erfassungseinheit (10c), eines Antwortkandidaten auf Basis eines Ergebnisses der semantischen Analyse;
Berechnen (S11S), durch eine Bewertungsberechnungseinheit (10d), einer Bewertung für den Antwortkandidaten auf Basis eines Ergebnisses der semantischen Analyse, wobei die Bewertungsberechnungseinheit (10d) die Bewertung gemäß der semantischen Analyse aktualisiert, die an der Sprache sequenziell durch die semantische Analyseeinheit (10b) durchgeführt wird, und
Durchführen (S124) einer Steuerung, um den Antwortkandidaten mitzuteilen, bis zu einem Zeitpunkt in der Mitte des Sprachtextes, gemäß der berechneten Bewertung, wobei eine Benachrichtigungssteuereinheit (10e) eine Steuerung durchführt, um eine Anzeige des Antwortkandidaten in Verbindung mit dem Aktualisieren der Bewertung zu aktualisieren und mehrere der Antwortkandidaten in Anzeigeformularen entsprechend den Bewertungen mitzuteilen.

13. Computerprogrammprodukt, umfassend Anweisungen, die, wenn das Programm von einem Computer ausgeführt wird, den Computer veranlassen, das Verfahren nach Anspruch 12 auszuführen.

## Revendications

1. Appareil de traitement d'informations comprenant :
une unité d'analyse sémantique (10b) configurée pour effectuer une analyse sémantique sur un texte d'énoncé reconnu par une unité de reconnaissance vocale (10a) jusqu'à un point temporel au milieu d'un énoncé ;
une unité de calcul de score (10d) configurée pour calculer un score pour une réponse candidate, acquis par une unité d'acquisition d'action de réponse (10c), sur la base d'un résultat de l'analyse effectuée par l'unité d'analyse sémantique (10b), où l'unité de calcul de score (10d) met à jour le score selon l'analyse sémantique effectuée séquentiellement sur l'énoncé par l'unité d'analyse sémantique (10b) : et
une unité de contrôle de notification (10e) configurée pour effectuer un contrôle pour notifier la réponse candidate, jusqu'à un point temporel au milieu de l'énoncé, selon le score calculé par l'unité de calcul de score (10d), où l'unité de contrôle de notification (10e) effectue un contrôle pour mettre à jour l'affichage de la réponse candidate en association avec la mise à jour du score et pour notifier une pluralité (21a, 21b, 21c, 21c-2, 22) des réponses candidates dans des formes d'affichage correspondant aux scores.

2. Appareil de traitement d'informations selon la revendication 1,
dans lequel l'unité de contrôle de notification (10e) effectue un contrôle pour afficher un nombre prédéterminé des réponses candidates ayant les scores les plus élevés sur la base des scores.

3. Appareil de traitement d'informations selon la revendication 1,
dans lequel l'unité de contrôle de notification (10e) effectue un contrôle pour afficher la ou les réponses candidates ayant un score dépassant une valeur prédéterminée.

4. Appareil de traitement d'informations selon la revendication 1,
dans lequel l'unité de contrôle de notification (10e) effectue un contrôle pour afficher les réponses candidates en utilisant des zones d'affichage correspondant aux valeurs des scores.

5. Appareil de traitement d'informations selon la revendication 1,
dans lequel l'unité de contrôle de notification (10e) effectue un contrôle pour afficher des icônes pour les réponses candidates, chaque icône comprenant des informations sur une taille de point d'affichage correspondant au score.

6. Appareil de traitement d'informations selon la revendication 1,
dans lequel l'unité de contrôle de notification (10e) effectue un contrôle pour afficher la ou les réponses candidates ayant un score inférieur à une valeur prédéterminée, de manière grisée.

7. Appareil de traitement d'informations selon la revendication 1,
dans lequel l'unité de contrôle de notification (10e) effectue un contrôle pour afficher le texte d'énoncé reconnu avec les réponses candidates.

8. Appareil de traitement d'informations selon la revendication 1,
dans lequel l'unité de calcul du score (10d) calcule le score, en prenant en outre en compte l'environnement d'un utilisateur courant.

9. Appareil de traitement d'informations selon la revendication 1, comprenant en outre :
une unité de contrôle d'exécution (10f) configurée pour effectuer un contrôle pour exécuter une réponse finale.

10. Appareil de traitement d'informations selon la revendication 9,
dans lequel un contrôle est effectué de manière à ce qu'une réponse finale, déterminée sur la base d'un résultat de l'analyse sémantique sur le texte de l'énoncé finalement déterminé après la fin de l'énoncé, soit exécutée.

11. Appareil de traitement d'informations selon la revendication 9,
dans lequel un contrôle est effectué de manière à ce qu'une réponse finale choisie par un utilisateur soit exécutée.

12. Procédé de contrôle comprenant les étapes suivantes :
exécuter (S115) une analyse sémantique sur un texte d'énoncé reconnu par une unité de reconnaissance vocale (10a) jusqu'à un point temporel au milieu d'un énoncé :
acquérir (S118), par une unité d'acquisition d'action de réponse (10c), une réponse candidate sur la base d'un résultat de l'analyse sémantique ;
calculer (S118), par une unité de calcul de score (10d), un score pour la réponse candidate sur la base d'un résultat de l'analyse sémantique, où l'unité de calcul de score (10d) met à jour le score selon l'analyse sémantique effectuée séquentiellement sur l'énoncé par l'unité d'analyse sémantique (10b) ; et
effectuer (S124) un contrôle pour notifier la réponse candidate, jusqu'à un point temporel au milieu de l'énoncé, en fonction du score calculé, où une unité de contrôle de notification (10e) effectue un contrôle pour mettre à jour l'affichage de la réponse candidate en association avec la mise à jour du score et pour notifier une pluralité de réponses candidates dans des formes d'affichage correspondant aux scores.

13. Programme informatique comprenant des instructions qui, lorsque le programme est exécuté par un ordinateur, amènent l'ordinateur à exécuter le procédé de la revendication 12.
